**Europäisches Patentamt**

**European Patent Office**

**Office européen des brevets**

(11) Veröffentlichungsnummer: **0 421 076 A1**

## (12) EUROPÄISCHE PATENTANMELDUNG

(21) Anmeldenummer: **90114633.2**

(22) Anmeldetag: **31.07.90**

(51) Int. Cl.⁵: **C01G 25/02, C04B 35/48**

(30) Priorität: **30.09.89 DE 3932781**

(43) Veröffentlichungstag der Anmeldung:
**10.04.91 Patentblatt 91/15**

(84) Benannte Vertragsstaaten:
**AT BE CH DE DK ES FR GB IT LI NL SE**

(71) Anmelder: **HÜLS AKTIENGESELLSCHAFT**
**Patentabteilung / PB 15 - Postfach 13 20**
**W-4370 Marl 1(DE)**

(72) Erfinder: **Scharf, Helmut, Dr.**
**Eschener Gaste 58**
**W-2960 Aurich(DE)**

(54) **Zirkondioxidpulver, Verfahren zu seiner Herstellung, dessen Verwendung sowie daraus hergestellte Sinterkörper.**

(57)
1. Zirkondioxidpulver, das gegebenenfalls stabilisiert ist, und Verfahren zu seiner Herstellung.

2.1 Die Verwendung von wäßrigen Lösungen und die Abtrennung von Niederschlägen sind wesentliche Nachteile bei den bisher praktizierten Verfahren zur Herstellung von Zirkondioxidpulvern. Außerdem besitzen die Verfahrensprodukte infolge einer inhomogenen Verteilung des Stabilisators und dem Vorliegen von großen Kristalliten und Agglomeraten oft nicht die gewünschten Fließ-, Preß- und Sintereigenschaften.

2.2 Durch Aufschmelzen von Zirkonylchlorid mit gegebenenfalls einem Stabilisator und Umsetzung des Chlorides mit gasförmigem Ammoniak, Abdampfen von Wasser und gegebenenfalls Chlorwasserstoff, Calcinierung des Reaktionsproduktes und Absublimieren von Ammoniumchlorid bei erhöhter Temperatur und gegebenenfalls Mahlen des calcinierten Produktes läßt sich ohne Anwendung der nachteiligen Verfahrensmaßnahmen ein gegebenenfalls stabilisiertes Zirkondioxidpulver mit guten Eigenschaften herstellen.

2.3 Das gegebenenfalls stabilisierte Zirkondioxidpulver eignet sich zur Herstellung von Sinterkörpern, die hohen mechanischen und/oder thermischen Belastungen ausgesetzt werden können.

EP 0 421 076 A1

# ZIRKONDIOXIDPULVER, VERFAHREN ZU SEINER HERSTELLUNG, DESSEN VERWENDUNG SOWIE DARAUS HERGESTELLTE SINTERKÖRPER

Konstruktionswerkstoffe, die hohen mechanischen und/oder thermischen Belastungen ausgesetzt sind, werden in zunehmendem Maße aus keramischen Werkstoffen hergestellt. Zirkondioxid ist aufgrund seiner Härte, seiner Zähigkeit, seiner geringen Wärmeleitfähigkeit und seiner chemischen Beständigkeit eine solche Keramik. Das für die Herstellung von Zirkondioxid-Sinterkörpern verwendete $ZrO_2$-Pulver wird in der Regel in mit anderen Oxiden, wie z. B. $Y_2O_3$, $CeO_2$ (oder Gemische Seltener Erden), CaO und/oder MgO, teil- oder vollstabilisierter Form eingesetzt. Damit die aus dem dotierten $ZrO_2$, z. B. durch Pressen oder Schlickerguß, hergestellten Grünlinge das gewünschte Sinterverhalten und die gesinterten Formkörper die angestrebten guten mechanischen und thermischen Eigenschaften aufweisen, ist es erforderlich, daß das zudosierte Oxid möglichst gleichmäßig in dem $ZrO_2$-Gitter verteilt ist. Außerdem sollte das Pulver fließfähig sein, und die Pulverteilchen sollten aus lockeren Agglomeraten bestehen.

Für die Herstellung von $ZrO_2$-Pulvern werden als Ausgangsmaterialien Baddeleyite (verunreinigtes $ZrO_2$) oder Zirkonsande ($ZrO_2$ x $SiO_2$) verwendet, die großtechnisch nach zwei Routen aufgearbeitet werden.

Bei der ersten Methode werden die Ausgangsmaterialien bei hohen Temperaturen alkalisch aufgeschlossen und die erhaltenen Verbindungen hydrolisiert, das erhaltene hydratisierte Zirkonhydroxid (bzw. Oxidaquat) in Schwefelsäure wieder aufgelöst und mit Ammoniak als basisches Sulfat oder Hydroxid (bzw. Oxidaquat) gefällt und schließlich calciniert. Diese Verfahren sind aufwendig, und die erhaltenen Pulver besitzen relativ große Kristallite, die zu harten Agglomeraten zusammengefügt sind, so daß sich diese Pulver nur schwer zu hochdichten Sinterkörpern verarbeiten lassen.

Bei der zweiten Route wird der Zirkonsand in Gegenwart von Kohlenstoff mit Chlor zu Zirkontetrachlorid umgesetzt, das zu Zirkonyl chlorid ($ZrOCl_2$ x $8H_2O$) hydrolisiert wird. Aus den wäßrigen Zirkonylchlorid-Lösungen wird mit Hilfe von Ammoniak oder Ammoniak-abgebenden Verbindungen Zirkonhydroxid (bzw. Zirkonoxid-Aquat) gefällt, das nach mehrmaligem Waschen anschließend calciniert wird. Nachteilig bei diesem Verfahren ist, daß die anfallenden Hydroxid-Niederschläge schwer filtrierbar sind, der Stabilisator nicht gleichmäßig verteilt ist, und die calcinierten Produkte harte Agglomerate darstellen.

Bessere Produkte werden erhalten, wenn das gefällte Zirkonhydroxid vor dem Calcinieren mit Hilfe einer Azeotrop-Destillation teilweise entwässert und der Niederschlag durch wiederholtes Auflösen in Schwefelsäure und erneutem Fällen mit Ammoniak zusätzlich chloridfrei gemacht wird. Das Hydroxid wird mit Hilfe von Citronensäure in den entsprechenden Komplex überführt, dieser durch Azeotrop-Destillation entwässert und schließlich calciniert. Diese Verfahren sind arbeitsintensiv und wegen der Stickoxide umweltbelastend.

In der europäischen Patentschrift 0 251 538 wird ein Verfahren beschrieben, bei dem eine wäßrige Lösung von Zirkonylchlorid über einen längeren Zeitraum bei Temperaturen unterhalb des Siedepunktes des Wassers erwärmt wird. Das gebildete Zirkonhydroxid wird von der Lösung abgetrennt, gewaschen und calciniert. Die Abtrennung und das Waschen des sehr feinen Hydroxid-Niederschlags sind sehr schwierig, und das erhaltene $ZrO_2$ ist nicht stabilisiert. Um es zu stabilisieren, müssen die Teilchen resuspendiert, durch eine alkalische Fällung mit dem Hydroxid des Stabilisators belegt, gewaschen, filtriert und erneut calciniert werden. Durch diese zusätzlichen Verfahrensschritte wird das Verfahren noch schwieriger.

Aus älterer Literatur, z. B. die im Gmelins Handbuch der anorganischen Chemie, 8. Auflage, Band 42 (Zirkon), Seiten 303 bis 306, zitierten Arbeiten, ist bekannt, daß festes $ZrOCl_2$ x $8H_2O$ durch starkes Erhitzen unter Abgabe von $H_2O$, HCl und eventuell $ZrCl_4$ in $ZrO_2$ umgewandelt werden kann. Diese Methode ist bisher nicht zu einem technischen Verfahren entwickelt worden, weil die erhaltenen Produkte keine hochwertigen Pulver darstellen und eine nachträg lich, einwandfreie Stabilisierung des $ZrO_2$ nicht möglich ist.

Es war daher Aufgabe der vorliegenden Erfindung, ein mikrokristallines, in weichen Agglomeraten vorliegendes und gegebenenfalls stabilisiertes Zirkondioxid-Pulver bereitzustellen, das die gegebenenfalls enthaltenen Stabilisatoren in homogener Verteilung enthält und gute Fließ-, Preß-, Spritz- und Sintereigenschaften besitzt sowie ein Verfahren zur Herstellung eines solchen Pulvers unter Vermeidung von wäßrigen Lösungen und Abtrennen von Niederschlägen zu entwickeln.

Diese Aufgabe wird erfindungsgemäß dadurch gelöst, daß kristallwasserhaltiges Zirkonylchlorid ($ZrOCl_2$ x $8H_2O$) und gegebenenfalls ein Stabilisator oder sein Precursor aufgeschmolzen werden, in die Schmelze gasförmiges Ammoniak eingeleitet wird, aus der bis zur Trockene eingedampften Schmelze bei erhöhter Temperatur das gebildete Ammoniumchlorid absublimiert, der Rückstand bei hohen Temperaturen calciniert und gegebenenfalls gemahlen wird.

Bei der Reaktion des Ammoniaks mit dem Zirkonylchlorid bilden sich Ammoniumchlorid und nicht näher untersuchte Oxidaquate des Zirkons. Durch die Einlagerung des Ammoniumchlorids in das Zirkonoxidaquat wird bei dem anschließenden Entwässerungsschritt ein stärkeres Agglomerieren des Zirkonoxidaquats verhindert. Das ursprünglich im Zirkonylchlorid vorhandene Chlor wird in Form des gebildetes Ammoniumchlorids aus dem Reaktionsprodukt entfernt, indem das Ammoniumchlorid bei erhöhter Temperatur absublimiert wird. Die Sublimationstemperatur des Ammoniumchlorids liegt laut Literatur bei 611 K.

Das Zusammenbringen des Ammoniak-Gases mit der Schmelze kann mit den in der Technik bekannten Methoden geschehen, wie z. B. Einleiten mittels eines Einleitungsrohres in die Schmelze, Aufdrücken des Ammoniak-Gases auf die bewegte Schmelze oder Versprühen der Schmelze mit Hilfe einer Düse in eine Ammoniakatmosphäre.

Das Molmengenverhältnis Zirkonylchlorid : Ammoniak kann zwischen 10: 1 und 1 : 2 schwanken. Bei dem Molmengenverhältnis Zirkonyl chlorid : Ammoniak = 1 : 2 wird das gesamte Chlorid des Zirkonylchlorids stöchiometrisch als Ammoniumchlorid gebunden. Ist das Molmengenverhältnis kleiner als 1 : 2, dann wird nur ein Teil des Chlorids als Ammoniumchlorid gebunden und der Rest muß während des Eindampfens der Schmelze zusammen mit dem Wasser als Chlorwasserstoff aus dem Reaktionsprodukt entfernt werden. Die partielle Überführung des Chlorids in Ammoniumchlorid hat den Vorteil, daß die Schmelze während des Einleitens des Ammoniaks rührbar bleibt. In diesem Fall werden Molmengenverhältnisse Zirkonylchlorid : Ammoniak zwischen 5 : 1 und 1 : 1 und besonders solche von 2 : 1 bis 1 : 1 bevorzugt. Der andere bevorzugte Arbeitsbereich ist die vollständige Überführung des im Zirkonylchlorid enthaltenen Chlorids in Ammoniumchlorid. Bei dieser Verfahrensvariante wird die Rührung der Schmelze in Abhängigkeit von der Viskosität der Schmelze durchgeführt oder die Schmelze wird durch Rotation des die Schmelze enthaltenden Reaktors bewegt. Auch bei der Versprühung der Schmelze in eine Ammoniakatmosphäre wird in der Regel eine vollständige Überführung des Chlorids in Ammoniumchlorid angestrebt. Die Umsetzung des Zirkonylchlorids mit Ammoniak im Verhältnis von ca. 1 : 2 hat den Vorteil, daß beim Eindampfen des Reaktionsproduktes chloridfreies Wasser abdestilliert und geringere Korrosionsprobleme entstehen. Nachteilig ist, daß größere Mengen an Ammoniumchlorid absublimiert werden müssen. Welche Verfahrensvariante angewendet wird, hängt u. a. auch von den gegebenen Entsorgungsmöglichkeiten für Salzsäure und Ammoniumchlorid ab. Im Prinzip kann das Ammoniak auch im Kreis gefahren werden, indem das Ammoniumchlorid z. B. mit Natronlauge unter Bildung von Ammoniak und Natriumchlorid umgesetzt wird und das entstehende Ammoniak zurück in die Zirkonylchloridschmelze geleitet wird.

In der Regel wird das erfindungsgemäße bzw. erfindungsgemäß hergestellte Zirkondioxid-Pulver mehr oder weniger stabilisiert (Teil-bzw. Vollstabilisierung). Als Stabilisator hat sich Yttriumoxid bewährt. Das Yttrium kann in Form seines Oxides oder einer anderen Verbindung, die unter den Calcinierbedingungen in die oxidische Form umgewandelt wird (Precursor), eingesetzt werden. Als Verbindungen kommen z. B. Hydroxide, Halogenide, organische Salze und organische Komplexe des Yttriums in Frage. Bevorzugt wird Yttrium chlorid, da auch die Ausgangsverbindung für das $ZrO_2$ in der Chlorid-Form eingesetzt wird.

Für teilstabilisiertes $ZrO_2$ beträgt die Stabilisatormenge (Yttriumoxid) in der Regel bis zu 7 Gewichtsprozent, besonders zwischen 0,1 und 6 Gewichtsprozent und ganz besonders zwischen 2 und 5 Gewichtsprozent, bezogen auf das fertige Pulver. Für vollstabilisiertes $ZrO_2$ liegen die Mengen dagegen zwischen 7 und 15 Gewichtsprozent, vorzugsweise zwischen 8 und 10 Gewichtsprozent, wobei die Grenzen zwischen Voll- und Teilstabilisierung in Abhängigkeit von den übrigen Pulvereigenschaften und den Sinterbedingungen fließend sind.

Nach dem Aufschmelzen der Salze und der Umsetzung mit dem Ammoniak-Gas, die in der Regel unter Rückfluß des Kristallwassers durchgeführt wird, wird das Kristallwasser und je nach dem Umsetzungsgrad mit Ammoniak ein Teil des im Zirkonylchlorid vorhandenen Chlorides in Form von Chlorwasserstoff bei Temperaturen zwischen 410 K und 480 K abdestilliert. Aus dem zurückbleibenden Pulver wird anschließend bei höherer Temperatur das Ammoniumchlorid absublimiert (Sublimationstemperatur des Ammoniumchlorids: 611 K). Auch das Absublimieren des Ammoniumchlorids kann durch einen geringen Gasstrom, bevorzugt wird Luft, beschleunigt werden. Die Gasmengen sollten möglichst niedrig gehalten werden, da es schwierig ist, das Ammoniumchlorid aus größeren Gasmengen wieder abzutrennen. Bevorzugt sind Strömungsgeschwindigkeiten von 0,001 bis 0,1 m/s.

Nach dem Absublimieren wird das zurückbleibende Produkt bei hohen Temperaturen calciniert. Die Calciniertemperatur kann je nach der gewünschten Kristallitgröße des $ZrO_2$ und der Härte der Agglomerate in weiten Grenzen schwanken. Da das Ammoniumchlorid möglichst vollständig absublimiert sein muß, sollte die untere Temperaturgrenze > 611 K sein. Die obere Calciniertemperatur ist bedingt durch den einsetzenden Sintervorgang.

Im allgemeinen wird die Calcinierung bei Temperaturen von 780 bis 1 280 K durchgeführt. Bevorzugt werden Temperaturen zwischen 880 und 1 080 K. Die Calcinierdauer richtet sich nach der Calciniertemperatur und den gewünschten Pulvereigenschaften. In der Regel beträgt sie 0,7 bis 90 ks, bevorzugt werden Zeiten zwischen 1,5 und 10 ks. Das nach dem Calcinieren erhaltene Pulver wird gegebenenfalls durch Mahlen, das trocken oder in flüssigen Medien, wie z. B. Wasser oder Alkohole, erfolgen kann, und gegebenenfalls Sieben auf die gewünschte Korngröße gebracht.

Das erfindungsgemäße Verfahren kann ein- oder zweistufig durchgeführt werden. Bei dem einstufigen Verfahren wird das Aufschmelzen der Ausgangssalze, die Umsetzung mit Ammoniak, das Abdestillieren des Wassers und gegebenenfalls des Hydrochlorids, das Absublimieren des Ammoniumchlorids und die Calcinierung des zurückbleibenden Produktes in einer Apparatur durchgeführt und die Temperatur durch ein entsprechendes Temperaturprogramm gesteuert. Das zweistufige Verfahren wird in zwei verschiedenen Reaktoren durchgeführt. In dem ersten Reaktor erfolgt das Aufschmelzen der Salze, die Umsetzung mit Ammoniak und das Eindampfen des Reaktionsproduktes. In der zweiten Stufe wird der Rückstand, gegebenenfalls nach Zwischenschaltung eines Mahlschrittes, in einem Ofen, z. B. Drehrohrofen, vom Ammoniumchlorid befreit und calciniert. Das Absublimieren des Ammoniumchlorids kann aber auch in einem separaten Schritt erfolgen.

Die erfindungsgemäßen bzw. erfindungsgemäß hergestellten Pulver besitzen eine lockere Agglomeratstruktur mit einer bimodalen Porenverteilung. Die Kristallitgrößen liegen zwischen 5 und 40 nm, wobei einige auch zu größeren Kristalliten zusammengewachsen sein können. Die Pulver lassen sich gut zu Grünlingen mit hoher Dichte verpressen und führen zu porenfreien Sinterkörpern, die die gewünschten mechanischen und thermischen Eigenschaften besitzen.

Anhand der nachfolgenden Beispiele soll die Erfindung näher erläutert werden. Die in den Beispielen benutzten Abkürzungen sowie Maß-und Prüfverfahren sind:

## EDX

Die Elementverteilung in den Proben wurde mit einem handelsüblichen EDAX-Gerät (Typ: EDAX 9900), angeschlossen an ein handelsübliches Rasterelektronenmikroskop, nach der Methode der energiedispersiven Röntgenanalyse (EDX) durchgeführt. Die Auflösung betrug ca. 25 nm.

## REM

Handelsübliches Rasterelektronenmikroskop

## STEM

Handelsübliches Transmissions-Rasterelektronenmikroskop

## Porenstruktur-Verteilung

Die Porenstruktur-Verteilung wurde mit einem handelsüblichen Hg-Hochdruckporosimeter der Firma Carlo Erba untersucht.

## Oberfläche

Die Oberfläche der Pulver wurde mit einem handelsüblichen Gerät nach der BET (Brunauer-Emmett-Teller)-Methode ($N_2$) und mit einem handelsüblichen Hg-Porosimeter der Firma Carlo Erba bestimmt.

## Kristallphase

Die Kristallstruktur wurde mit einem handelsüblichen Gerät mit Hilfe der Röntgenbeugungsanalyse ermittelt.

## Kristalldurchmesser

Der Durchmesser der Kristallite wurde durch Ausmessen der Kristallite in den STEM-Aufnahmen und aus den Einzelpeaks der Röntgenbeugungsaufnahmen erhalten. Als Difraktometer wurde ein handelsübliches Gerät der Firma Philips (Typ: PW 1800) verwendet.

## Sinterverhalten

Die Kinetik des Sinterns der Proben (Längenänderung als Funktion der Temperatur) wurde mit einem handelsüblichen Dilatometer der Firma Baehr verfolgt.

## Chlorgehalt

Der Chlorgehalt der Proben wurde mit einem handelsüblichen Gerät nach der Röntgenfluoreszenzmethode bestimmt.

## Härte der Agglomerate

Da es für die Bestimmung der Härte der Agglomerate keine allgemein übliche Methode gibt, wurde sie qualitativ - und nur in Relation der Produkte zueinander - durch Zerreiben der Pulver zwischen zwei Glasscheiben mit den Fingern ermittelt.

## Vickershärte

Die Härte der gesinterten Proben wurde nach der Methode von Vickers bestimmt (DIN 50 351).

## Beispiel 1

200 g $ZrOCl_2$ x $8H_2O$ (0,62 Mol) und 8,2 g $YCl_3$ x $6H_2O$ (0,027 Mol) wurden in einem Mörser homogenisiert und in einem Glaskolben bei 413 K aufgeschmolzen. In die Schmelze wurden unter Rühren und Rückfluß des abdampfenden Wassers ca. 15 $Ndm^3$ $NH_3$ eingeleitet. Während des Einleitens des Ammoniaks nahm die Viskosität der Schmelze zunächst etwas ab, um dann zuzunehmen. Nach ca. 15 $Ndm^3$ $NH_3$ wurden die Rührung abgestellt und weitere 15 $Ndm^3$ $NH_3$ - (Gesamtmenge $NH_3$: > 1,3 Mol) eingeleitet. Nach Beendigung der $NH_3$-Einleitung wurde das Reaktionsprodukt durch Temperaturerhöhung des äußeren Heizbades auf 473 K und Abdampfen des Wassers bis zur Trockne eingedampft. Nach Erreichen der Temperatur von 473 K wurde der Eindampfvorgang durch Anlegen eines Vakuums von 50 hPa beschleunigt. Der pH-Wert des abdestillierten Wassers betrug 9,3. Der Eindampfrückstand wurde 1,8 ks in einer Kugelmühle gemahlen und anschließend in einem Röhrenofen bei einem schwachen Luftstrom (ca. 35 $cm^3$/s) calciniert. Die Temperatur wurde hierbei mit 10 K/60 s von 473 K auf 1 073 K angehoben und 3,6 ks bei 1 073 K gehalten. Während des Aufheizens sublimierte das Ammoniumchlorid ab. Das calcinierte Pulver, in dem kein Chlor nachgewiesen werden konnte, besaß keine harten Agglomerate, und auch in den REM- und STEM-Aufnahmen waren keine größeren Agglomerate erkennbar. Es wies eine bimodale Porenverteilung auf und bestand zu 88 % aus tetragonaler und zu 12 % aus monokliner Phase. Die Kristallitgröße betrug ca. 40 nm und für die Oberfläche wurden sowohl nach der BET- als auch nach der Hg-Porosimetrie-Methode 17 $m^2$/g gefunden. Mit Hilfe der STEM-und EDX-Methode konnten keine Inhomogenitäten bei der Yttrium-Verteilung festgestellt werden. Aus dem Pulver hergestellte Tabletten zeigten im Dilatometer ein Sintermaximum bei 1 500 K und eine Längenänderung von 15,5 %. Bei 1 830 K gesinterte Tabletten zeigten im Schliffbild (Diamantpulver) keine Poren und wiesen eine Vickershärte von 12,0 GPa auf.

## Beispiele 2 und 3

Der Versuch von Beispiel 1 wurde in zwei weiteren Versuchen mit unterschiedlichen Ammoniak-Mengen wiederholt: 1,4 $Ndm^3$ und 9,7 $Ndm^3$. Die Calciniertemperatur betrug 927 K. Die calcinierten und gemahlenen Pulver wiesen eine bimodale Porenverteilung auf und besaßen nach der BET-Methode eine Oberfläche von 50 bzw. 54 $m^2$/g und nach der Hg-Porosimetrie-Methode eine solche von 20 bzw. 32 $m^2$/g. Die Kristallitgröße, bestimmt mit Hilfe der Röntgenbeugungsanalyse, betrug für die tetragonale Phase 14 bzw. 16 nm, und für das Verhältnis der tetragonalen zur monoklinen Phase wurden 94 : 6 bzw. 88 : 12 gefunden. Aus dem Pulver hergestellte Tabletten zeigten im Dilatogramm ein Sintermaximum bei 1 492 bzw. 1 517 K. In den Schliffbildern der bei 1 800 K für 3 bzw. 7 ks gesinterten Tabletten waren keine Poren erkennbar und die Vickershärte betrug 10,5 bzw. 11,1 bis 12,0 GPa.

## Beispiel 4

Der in Beispiel 3 beschriebene Versuch wurde wiederholt mit dem Unterschied, daß der Ansatz nach der Ammoniak-Zugabe bei der Temperatur von 413 K für weitere 1,2 ks unter Rückfluß der abdestillierten Salzsäure gehalten wurde. Aus dem calcinierten und gemahlenen Pulver mit einem Druck von 760 MPa gepreßte Tabletten zeigten im Dilatometer ein Sintermaximum bei 1 470 K. Tabletten, die 1,2 ks bei 1 830 K gesintert wurden, waren porenfrei und besaßen eine Vikkershärte von 10,8 GPa.

## Beispiele 5 und 6

In einer Schmelze aus 500 g $ZrOCl_2$ x $8H_2O$ und 20,5 g $YCl_3$ x $6H_2O$ wurden bei einer Badtemperatur von 413 K 58,1 g $NH_4Cl$ aufgelöst und die Schmelze durch Temperaturerhöhung auf 470 K und gegen Ende des Vorganges durch Anlegen eines Vakuums von 54 hPa eingetrocknet. Ein Teil des Rückstandes wurde im Kolben zerkleinert und 1,8 ks bei 470 K und anschließend 50 ks bei Raumtemperatur mit Ammoniak-Gas beaufschlagt und schließlich bei 920 K (3,6 ks) calciniert. Der andere Teil des Eindampfrückstandes wurde direkt bei 920 K calciniert (ebenfalls 3,6 ks) und anschließend 3,6 ks lang bei dieser Temperatur mit Ammoniak-Gas behandelt. Aus den beiden Pulvern

hergestellte Tabletten zeigen im Dilatogramm Sintermaxima bei 1 520 bzw. 1 550 K, und Tabletten, die bei 1 840 K gesintert wurden (8 ks), besaßen Vickershärten von 10,2 bzw. 11,2 GPa.

Vergleichsbeispiel

100 g $ZrOCl_2$ x $8H_2O$ und 2,4 g $YCl_3$ x $6H_2O$ wurden ohne weitere Zusätze aufgeschmolzen und wie in Beispiel 1 zu einem Pulver verarbeitet. Das Produkt bestand aus harten Agglomeraten mit einem Durchmesser von 0,5 bis 1 µm, die sich nicht zu hochdichten Formkörpern verpressen und sintern ließen.

**Ansprüche**

1. Zirkondioxidpulver, hergestellt durch Umsetzung von geschmolzenem Zirkonylchlorid ($ZrOCl_2$ x $8H_2O$) mit gasförmigem Ammoniak, Abdampfen von Wasser und gegebenenfalls Chlorwasserstoff, Absublimieren des gebildeten Ammoniumchlorids, Calcinieren des Reaktionsproduktes bei erhöhter Temperatur und gegebenenfalls Mahlen des calcinierten Produktes.
2. Zirkondioxidpulver nach Anspruch 1,
dadurch gekennzeichnet,
daß es einen Stabilisator enthält.
3. Verfahren zur Herstellung von Zirkondioxidpulver,
dadurch gekennzeichnet,
daß Ammoniak-Gas in geschmolzenes Zirkonylchlorid eingeleitet, die Schmelze durch Abdampfen von Wasser und gegebenenfalls Chlorwasserstoff eingetrocknet, das entstandene Ammoniumchlorid bei erhöhter Temperatur absublimiert, das Reaktionsprodukt calciniert und der Rückstand gegebenenfalls gemahlen wird.
4. Verfahren nach Anspruch 3,
dadurch gekennzeichnet,
daß die Umsetzung des Zirkonylchlorids in Gegenwart eines Stabilisators oder seines Precursors durchgeführt wird.
5. Verfahren nach Anspruch 4,
dadurch gekennzeichnet,
daß als Stabilisator Yttriumchlorid zugesetzt wird.
6. Verfahren nach den Ansprüchen 3 bis 5,
dadurch gekennzeichnet,
daß während der Ammoniak-Zugabe die Schmelze gegebenenfalls unter Rückfluß von Salzsäure gehalten wird.
7. Verfahren nach den Ansprüchen 3 bis 6,
dadurch gekennzeichnet,
daß Zirkonylchlorid und Yttriumchlorid vor dem Aufschmelzen durch Mahlen homogenisiert werden.

8. Verfahren nach den Ansprüchen 3 bis 7,
dadurch gekennzeichnet,
daß das Ammoniak-Gas mit leichtem Überdruck mittels eines Einleitungsrohres oder eines Impellerrührers in die Schmelze eingerührt wird.
9. Verfahren nach den Ansprüchen 3 bis 7,
dadurch gekennzeichnet,
daß die gerührte Schmelze mit dem Ammoniak-Gas überschichtet wird.
10. Verfahren nach den Ansprüchen 3 bis 7,
dadurch gekennzeichnet,
daß die Schmelze mit Hilfe einer Düse in eine Ammoniak-Atmosphäre gesprüht wird.
11. Verfahren nach den Ansprüchen 3 bis 10,
dadurch gekennzeichnet,
daß das Eindampfen der Schmelze durch Anlegen eines Vakuums beschleunigt wird.
12. Verfahren nach den Ansprüchen 3 bis 11,
dadurch gekennzeichnet,
daß das Molverhältnis Zirkonylchlorid : Ammoniak 10 : 1 bis 1 : 2 beträgt.
13. Verfahren nach Anspruch 12,
dadurch gekennzeichnet,
daß das Molverhältnis Zirkonylchlorid : Ammoniak 2 : 1 bis 1 : 2 beträgt;
14. Verfahren nach den Ansprüchen 3 bis 13,
dadurch gekennzeichnet,
daß das Ammoniumchlorid bei Normaldruck oder Vakuum absublimiert wird.
15. Verfahren nach den Ansprüchen 3 bis 14,
dadurch gekennzeichnet,
daß die Calcinierung bei Temperaturen von 780 bis 1 280 K durchgeführt wird.
16. Verfahren nach Anspruch 15,
dadurch gekennzeichnet,
daß die Calcinierung bei einer Temperatur von 880 bis 1 080 K durchgeführt wird.
17. Verwendung von Zirkondioxidpulver gemäß den Ansprüchen 1 bis 2 bzw. erhalten nach dem Verfahren der Ansprüche 3 bis 16 zur Herstellung von Sinterkörpern.
18. Sinterkörper, hergestellt aus Zirkondioxidpulver gemäß den Ansprüchen 1 und 2 bzw. erhalten nach dem Verfahren der Ansprüche 3 bis 16.

**Europäisches Patentamt**

# EUROPÄISCHER RECHERCHENBERICHT

Nummer der Anmeldung

## EP 90 11 4633

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | BE-A-7 031 07 (STAUFFER CHEMICAL CO.)<br>— — — | | C 01 G 25/02<br>C 04 B 35/48 |
| A | CHEMICAL ABSTRACTS, Band 110, Nr. 22, 29. Mai 1989, Seite 166, Zusammenfassung Nr. 195755v, Columbus, Ohio, US;<br>& JP-A-63 274 625 (KATO, ETSUO) 11-11-1988<br>— — — | | |
| A | CHEMICAL ABSTRACTS, Band 96, Nr. 12, März 1982, Seite 142, Zusammenfassung Nr. 87878w, Columbus, Ohio, US; V.A. KOZHEMYAKIN et al.: "Low-waste production of zirconium compounds",<br>& TSVETN. MET. 1981, (10), 75-7<br>— — — | | |
| A | CHEMICAL ABSTRACTS, Band 97, Nr. 24, Dezember 1982, Seite 628, Zusammenfassung Nr. 207102h, Columbus, Ohio, US; T. JIANG: "Preparation and properties of zirconium oxide chloride",<br>& PIGE KEJI 1982, (2), 20-3<br>— — — — — | | |

| RECHERCHIERTE SACHGEBIETE (Int. Cl.5) |
|---|
| C 01 G<br>C 01 B |

Der vorliegende Recherchenbericht wurde für alle Patentansprüche erstellt

| Recherchenort | Abschlußdatum der Recherche | Prüfer |
|---|---|---|
| Den Haag | 17 Januar 91 | LIBBERECHT-VERBEECK |

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze

E: älteres Patentdokument, das jedoch erst am oder nach dem Anmeldedatum veröffentlicht worden ist
D: in der Anmeldung angeführtes Dokument
L: aus anderen Gründen angeführtes Dokument

&: Mitglied der gleichen Patentfamilie, übereinstimmendes Dokument